# EUROPEAN PATENT APPLICATION

(11) **EP 3 326 704 A1**
(43) Date of publication of application: **30.05.2018**
(21) Application number: 16830717.1
(22) Date of filing: 06.07.2016
(51) Int. Cl.: B01D 3/14, B01D 3/32, B01D 3/00

(54) **DISTILLATION SYSTEM AND DISTILLATION METHOD THEREOF**

(30) Priority: 24.07.2015 KR 20150105322
(71) Applicant: Sunteco Limited, Anyang-si, Gyeonggi-do 14119 (KR)
(72) Inventor: LEE, Joo Sun, Seongnam-si Gyeonggi-do 13479 (KR)
(74) Representative: KIPA AB
(86) International application number: PCT/KR2016/007318
(87) International publication number: WO 2017/018684

(57) **Abstract**

The present disclosure relates to a distillation system for separating a mixed material existing in feedstock into a high volatile component and a low volatile component using difference of boiling point, the system comprising: an evaporation-separator which evaporates the high volatile component to discharge the high volatile component as an overhead vapor; a first compressor which receives the discharged overhead vapor and adiabatically compresses the received discharged overhead vapor; an evaporator which receives the adiabatically compressed overhead vapor, exchanges heat between water supplied from a water supply source and the compressed overhead vapor, and evaporates the water into water vapor; and a second compressor which receives the evaporated water vapor and compresses the received evaporated water vapor. Accordingly, provided herein is a distillation system and distillating method thereof, capable of compressing the overhead vapor before the overhead vapor is introduced into the evaporator, and then increasing the amount of saturated water vapor in the method of generating the saturated water vapor using the condensed latent heat of the compressed overhead vapor, thereby reducing distillation cost.

## Description

### BACKGROUND

### Field

The present disclosure relates to a distillation system and distillation method thereof, and more particularly, to a distillation system and distillation method thereof wherein water is evaporated at an evaporator using condensation latent heat of overhead vapor discharged from an evaporation-separator, the evaporated water vapor is compressed and heat of the compressed water vapor is used as an evaporation heat source for separating a mixed material, wherein an overhead vapor is (adiabatically) compressed before the overhead vapor is introduced into an evaporator, thereby improving heat efficiency.

### Description of Related Art

A distillation system is intended to evaporate and separate mixed materials existing in feedstock by difference of boiling point. At an upper portion of the distillation system, a high volatile component is evaporated and separated in the form of overhead vapor, and at a lower portion of the distillation system, a low volatile component is separated in an un-distilled state. Here, the high volatile component and the low volatile component may each be a single component, or a mixture of two or more components.

Such a distillation system necessarily includes an evaporation-separator for separating materials according to difference of boiling point. Examples of the evaporation-separator include a distillation column, a rectification column, a stripping column, and a stripping vessel or a stripper, etc.

Of the various kinds of evaporation-separators, for extracting a high volatile component, the rectification column is used, and for extracting a low volatile component, the stripping column, stripping vessel or stripper is used. The stripping column is mainly used for extracting a low volatile component having a low viscosity, and the stripping vessel or stripper is used for extracting a low volatile component having a high viscosity.

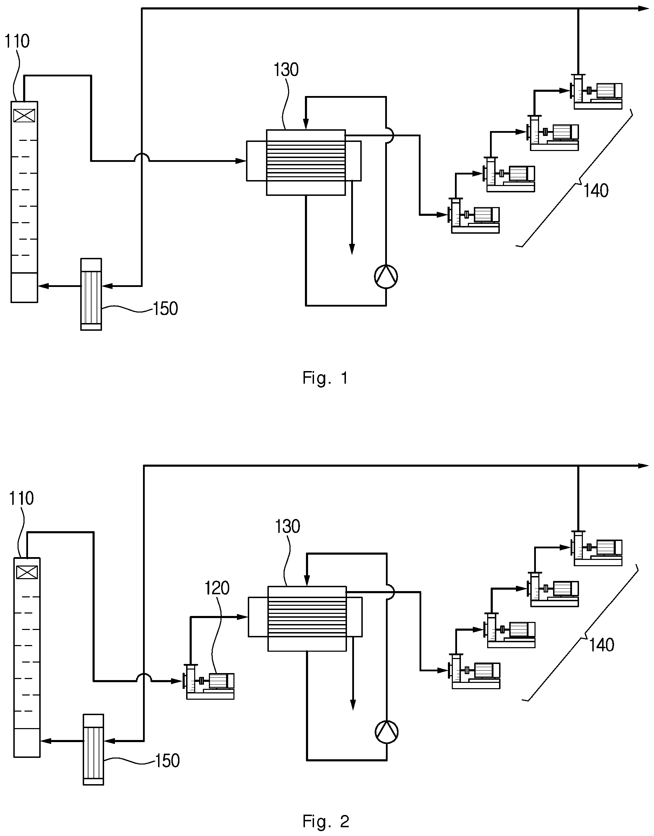

FIG. 1 is a view schematically illustrating a conventional distillation system. The distillation system of FIG. 1 is configured to include an evaporation-separator 110 to which feedstock is supplied; an evaporator 130 for exchanging heat between overhead vapor discharged from the evaporation-separator 110 and water; a condenser (not illustrated) for finally condensing the overhead vapor not condensed in the evaporator 130; a compressor 140 for compressing water vapor evaporated from the evaporator 130; and a reboiler 150.

To explain an operation process of a conventional distillation system, first of all, feedstock is supplied from a raw material supply unit (not illustrated) to the evaporation-separator 110. When steam is supplied to the reboiler 150 according to the temperature required in the evaporation-separator 110, a high volatile component of the feedstock is evaporated and discharged as overhead vapor, and a low volatile component is separated in the lower portion in the form of condensate. Here, from the evaporation-separator 110, only the high volatile component having a boiling point of or below a certain temperature is discharged as the overhead vapor, whereas the material having a boiling point of or more than the certain temperature is not discharged as the overhead vapor. The evaporator 130 exchanges heat between the condensed latent heat of the overhead vapor and water, and generates saturated water vapor. The saturated water vapor generated in the evaporator 130 passes through a multi-stage Mechanical Vapor Recompression 140, and is re-supplied as heat source of the evaporation-separator 110.

Such a conventional distillation system uses a method for evaporating water using the condensation latent heat of the overhead vapor, which generates saturated water vapor, compresses the saturated water vapor at the compressor 140, and uses the compressed saturated water vapor as an additional heat source of the distillation system. That is, efforts have been needed to enable re-utilization of the energy generated during a distillation process so as to improve energy efficiency of the entire distillation system.

### SUMMARY

Therefore, a purpose of the present disclosure is to solve the aforementioned problems of prior art, that is, to provide a distillation system and distillation method thereof, where overhead vapor is adiabatically compressed before being introduced into an evaporator so that condensed latent heat of the compressed overhead vapor is used to generate more amount of saturated water vapor to be utilized as energy source during the process, thereby reducing the amount of steam produced in a factory boiler.

The problems that the present disclosure intends to solve are not limited to the aforementioned problems, and thus other problems not mentioned above will be clearly understood by a person skilled in the art from the following disclosure.

The aforementioned purposes are achieved by a distillation system for separating a mixed material existing in feedstock into a high volatile component and a low volatile component using difference of boiling point, the system comprising: an evaporation-separator which evaporates the high volatile component to discharge the high volatile component as an overhead vapor; a first compressor which receives the discharged overhead vapor and adiabatically compresses the received discharged overhead vapor; an evaporator which receives the adiabatically compressed overhead vapor, exchanges heat between water supplied from a water supply source and the compressed overhead vapor, and evaporates the water into water vapor; and a second compressor which receives the evaporated water vapor and compresses the received evaporated water vapor.

Here, heat of the water vapor compressed at the second compressor is preferably supplied as a heat source for separating the mixed material in the distillation system. Otherwise, heat of the water vapor compressed at the second compressor may be used as a heat source of other processes that need compressed steam.

Here, the first compressor adiabatically compresses the overhead vapor preferably using Mechanical Vapor Recompression (MVR) method.

The aforementioned purposes are achieved by a distillation method at a distillation system for separating a mixed material existing in feedstock into a high volatile component and a low volatile component using difference of boiling point, the method comprising following steps: (a) applying heat to an evaporation-separator containing the mixed material and evaporating the high volatile component to discharge the high volatile component as an overhead vapor; (b) adiabatically compressing the discharged overhead vapor by means of a first compressor which receives the discharged overhead vapor; (c) evaporating the water into water vapor by exchanging heat between water and the adiabatically compressed overhead vapor by means of an evaporator which receives the adiabatically compressed overhead vapor; and (d) compressing the water vapor by means of a second compressor which receives the evaporated water vapor.

Further, the method may further include, after the step (d), (e) supplying heat of the compressed water vapor as a heat source for separating the mixed material in the distillation system. Otherwise, heat of the compressed water vapor may be supplied as a heat source of other processes that need compressed steam.

According to the aforementioned distillation system and distillation method of the present disclosure, there is an advantage that the overhead vapor is adiabatically compressed before being introduced into the evaporator, and then condensed latent heat of the compressed overhead vapor is used to generate saturated water vapor, and the generated saturated water vapor is compressed, thereby increasing the amount of compressed steam being supplied and reducing the amount of steam being produced in a factory boiler.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present between two elements. Like reference numerals refer to like elements throughout.
FIG. 1 is a view schematically illustrating a conventional distillation system.
FIG. 2 is a view schematically illustrating a distillation system according to an embodiment of the present disclosure.
FIG. 3 is a view schematically illustrating a conventional distillation system illustrating data acquisition points regarding Table 1 and Table 3.
FIG. 4 is a view schematically illustrating a distillation system according to an embodiment of the present disclosure illustrating data acquisition points regarding Table 2 and Table 4.
FIG. 5 is a flowchart of a distillation method according to an embodiment of the present disclosure.

### DETAILED DESCRIPTION

Hereinbelow, for explaining configurative elements having the same features, the explanation will be made in a first embodiment as a representative using the same reference numerals, and in the rest of the embodiments, explanation will be made on features that are different from the first embodiment.

Hereinafter, explanation will be made on a distillation system and distillation method thereof according to the first embodiment of the present disclosure with reference to the drawings attached.

FIG. 2 is a view schematically illustrating a distillation system according to an embodiment of the present disclosure.

The distillation system according to the embodiment of the present disclosure may be configured to include an evaporation-separator 110, a first compressor 120, an evaporator 130 and a second compressor 140.

The evaporation-separator 110 is an apparatus for receiving feedstock or raw materials composed of mixed materials and for separating the received feedstock into high volatile component and low volatile component. The evaporation-separator 110 may receive heat from a reboiler 150. Here, by the quantity of heat retained by the low volatile component in the lower portion, that has been heated and evaporated by the reboiler 150, the high volatile component of the mixed material is evaporated and discharged as overhead vapor.

In the drawings, there is only one evaporation-separator 110 illustrated, but configurations using a plurality of evaporation-separators are also known, and thus features of the technical concept of the present disclosure may of course be applied thereto as well.

The first compressor 120 performs an adiabatic compression of the overhead vapor discharged from the evaporation-separator 110 before introducing the overhead vapor into the evaporator 130. Here, as the pressure of the overhead vapor rises, its temperature rises accordingly. In the present disclosure, the first compressor 120 may be configured to adiabatically compress the overhead vapor using Mechanical Vapor Recompression (MVR) method.

The evaporator 130 generates saturated water vapor by heat exchange of water with the condensation latent heat of the overhead vapor adiabatically compressed at the first compressor 120. Specifically, from a separate water supply source (not illustrated), water is supplied to the evaporator 130, and the supplied water is evaporated according to the required temperature and pressure, and by the second compressor 140, the saturated water vapor is compressed to reach the temperature and pressure required by evaporation-separator 110. Uncondensed overhead vapor is re-circulated and supplied to the evaporator 130, while the condensed overhead vapor is discharged to outside from the evaporator 130. Further, the saturated water vapor evaporated from the evaporator 130 passes through the second compressor 140.

The second compressor 140 compresses the saturated water vapor generated in the evaporator 130 until the temperature and pressure reach temperature and pressure required by the evaporation-separator 110. The second compressor 140 may be configured to perform multi-stage compression using a plurality of Mechanical Vapor Recompression (MVR).

Meanwhile, a high speed turbo compressor or a low speed blower type centrifugal compressor and the like may be used as the apparatus using the Mechanical Vapor Recompression (MVR) method. In the case of using the blower type compressor, it is a blower type compressor having a low speed of 10000rpm or below, and since it operates at low speed, there is an advantage of safe operation without any damage to the compressor even during long term operations. However, the blower type compressor is a low speed compressor of 10000rpm or below, and preferably between 4000 and 7000rpm, that is, the compression ratio is lower than the high speed turbo compressor. Therefore, in order to compensate for the low compression ratio, the blower type compressor may be composed of a plurality of blower type compressors. That is, the saturated water vapor saturated in the condensation-evaporator 130 is compressed at multi-stages in the plurality of blower type compressors according to a predetermined compression ratio.

In FIG. 2, the second compressor 140 was explained as a low speed blower type compressor having multi-stages as an example, but as long as the second compressor 140 can compress the saturated water vapor generated in the evaporator 130 to reach the temperature and pressure required by the evaporation-separator 110 or required by other processes, the second compressor is not limited to the low speed blower type compressor.

The saturated water vapor evaporated from the evaporator 130 is adiabatically compressed with multi-stages by each compressor 140 sequentially according to a predetermined compression ratio (for example, compression ratio of 1.3∼ 1.4). Normally, at each stage, the temperature is raised by about 8∼ 13°C, and in the case of four stages, the temperature may be raised up to about 40∼ 50°C.

Further, when the saturated water vapor is being compressed in each compressor 140, the compressed saturated water vapor is superheated, and thus a desuper-heating which removes the overheat by supplying certain condensate to each compressor 140 is necessary. Therefore, additional saturated water vapor will be obtained in every stage and the amount of saturated water vapor may slightly increase at each stage.

The water vapor compressed in the second compressor 140 is supplied to the reboiler 150 to be used as heat source of the evaporation-separator 110 or heat source of other processes.

As mentioned above, the evaporation-separator 110 includes a distillation column, a rectification column, a stripping column, and a stripping vessel or a stripper, etc. Generally, overhead vapor of the rectification column is composed of various kinds of hydrocarbons, and overhead vapor of the stripping column and stripping vessel or stripper is composed of various kinds of hydrocarbons and moisture.

According to the Dalton's Law regarding mixed gas, each gas has a partial pressure in proportion to the mole fraction that it accounts for in the Molar mass of the mixed gas, and the partial pressure of each gas is determined according to the definition that the sum of each partial pressure is identical to the total pressure of the mixed gas.

Regarding the discharge temperature of the overhead vapor, the temperature of each gas is identical. However, the discharge pressure of the overhead vapor is different in each gas due to the partial pressure according to the mole fraction of each gas. When saturated water vapor is generated using the condensation latent heat of the overhead vapor in the evaporator 130, condensation starts from the gas such as water having a low saturation vapor pressure, that is, having a high condensation temperature. With the gas volume reduced due to the condensation decreases the partial pressure, partial pressure of other gases are raised by as much as the reduced partial pressure. Then, condensation of the other gases begins and finally, the gas with the highest saturation vapor pressure is condensed at the lowest temperature. In this way, the entirety of the overhead vapor is condensed.

In the present disclosure, by the first compressor 120, it is possible to raise the pressure of the overhead vapor, and thus, raise the final partial pressure of the overhead vapor which is condensed at the evaporator 130. Therefore, it is possible to condense an increased amount of overhead vapor at a higher temperature and to increase the temperature at which the water vapor is evaporated, whereby there is an advantage to reduce the number of stages of the second compressor and to optimize electricity consumption.

Hereinafter, a distillation system in which the overhead vapor is compressed by the first compressor 120 before it is introduced into the evaporator 130 as in the present disclosure, is compared with a conventional distillation system where overhead vapor is introduced directly into the evaporator 130 without being compressed, and the simulation results are analyzed.

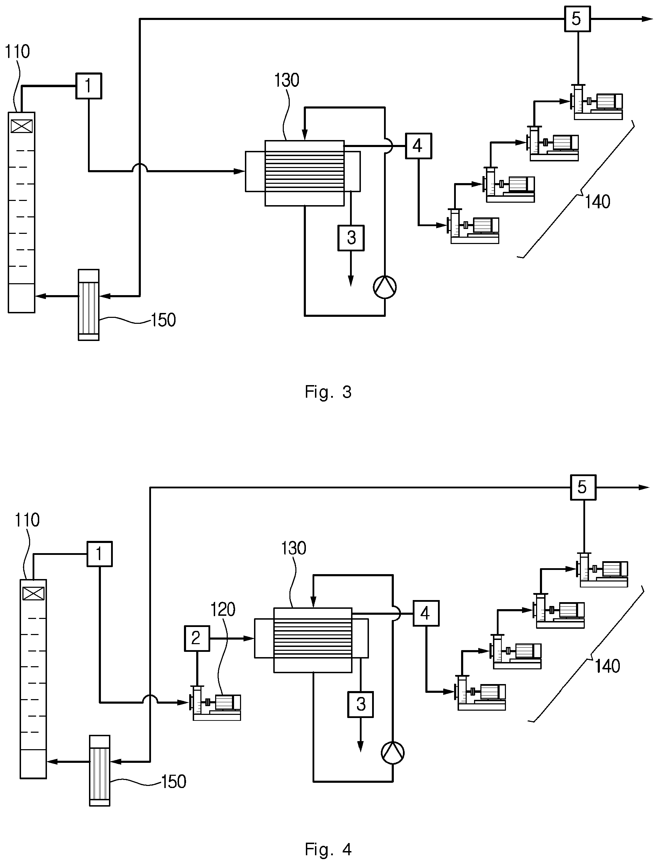

FIG. 3 is a view schematically illustrating a conventional distillation system illustrating data acquisition points regarding Table 1 and Table 3, and FIG. 4 is a view schematically illustrating a distillation system according to an embodiment of the present disclosure illustrating data acquisition points regarding Table 2 and Table 4.

Each of Nos. 1, 2, 3, 4 and 5 indicated in the drawings represents a position from which the data value in the table below has been obtained.

### 1. In the case where overhead vapor is composed of water and methanol

< Table 1> and < Table 2> represent distillation data at each point illustrated in the drawings, in the aforementioned conventional distillation system and the distillation system according to the present disclosure, respectively. In both cases, the overhead vapor is composed of water and methanol.

**[Table 1]**

| | No. 1 | No. 2 | No. 3 | No. 4 | No. 5 |
|---|---|---|---|---|---|
| Mass flow rate (kg/h) | 20,000 | | 20,000 | **4,400** | **4,940** |
| **-Methanol (kg/h)** | **16,000** | | **16,000** | **0** | **0** |
| **-Water (kg/h)** | **4,000** | | **4,000** | **4,400** | **4,940** |
| **Pressure (barA)** | **1.0** | | **0.9377** | **0.3123** | **1.3385** |
| **Temperature (°C)** | **76.6** | | **70.3** | **70.0** | **108.0** |
| **Condensate fraction (wt%)** | **0.0** | | **33.1** | **0.0** | **0.0** |
| **Log Mean Temperature Difference (LMTD) (°C)** | **2.081** | | | | |
| **Heat exchange area (m²)** | **1,580.0** | | | | |
| **MVR power (KW)** | | | | **450.0** | |

### <Table 1 : Conventional Technology>

**[Table 2]**

| | No. 1 | No. 2 | No. 3 | No. 4 | No. 5 |
|---|---|---|---|---|---|
| Mass flow rate (kg/h) | 20,000 | 20,000 | 20,000 | **11,800** | **13,250** |
| **-Methanol (kg/h)** | **16,000** | **16,000** | **16,000** | **0** | **0** |
| **-Water (kg/h)** | **4,000** | **4,000** | **4,000** | **11,800** | **13,250** |
| **Pressure (barA)** | **1.0** | **1.25** | **1.25** | **0.3123** | **1.3385** |
| **Temperature (°C)** | **76.6** | **99.4** | **71.1** | **70.0** | **108.0** |
| **Condensate fraction (wt%)** | **0.0** | **0.0** | **100.0** | **0.0** | **0.0** |
| **Log Mean Temperature Difference (LMTD) (°C)** | **6.852** | | | | |
| **Heat exchange area (m²)** | **1,580.0** | | | | |
| **MVR power (KW)** | **175** | | | **1200** | |

### <Table 2: Present Invention>

In <Table 1> and <Table 2>, No. 1 data is data of the overhead vapor discharged through the evaporation-separator 110, the overhead vapor composed of water and methanol. The water and methanol are discharged from the evaporation-separation in the amount of 16,000 (kg/h) and 4,000 (kg/h), respectively, the pressure and temperature conditions being identical. In <Table 2>, No. 2 data is data of overhead vapor that passed through the first compressor 120 according to an embodiment of the present disclosure, and it can be seen that the pressure rose from 1.0 barA to 1.25 barA, and that the temperature rose from 76.6 °C to 99.4 °C, by the adiabatic compression of the first compressor 120. Therefore, the present disclosure is characterized in that the overhead vapor discharged from the evaporation-separator 110 is introduced into the evaporator 130 after it is compressed preliminarily by the first compressor 120.

In <Table 1> and <Table 2>, No. 4 data represents data of the saturated water vapor evaporated from water at the evaporator 130 using the condensation latent heat of the overhead vapor. As shown in the tables, it can be seen that under the same pressure and temperature, in the conventional method, 4,400 (kg/h) of saturated water vapor is generated at the evaporator 130, but in the present disclosure, a far more amount of 11,800 (kg/h) of saturated water vapor is generated. The amount of the saturated water vapor after final compression by the second compressor 140 is 4,940 (kg/h) and 13,250 (kg/h), respectively. Further, it can be seen that even though the conventional distillation system and the distillation system according to the present disclosure use the same evaporator 130 and thus have the same heat exchange area, their Log Mean Temperature Differences (LMTD) are significantly different from each other, due to the compression by the first compressor 120.

### 2. In the case where the overhead vapor is composed of various different kinds of material (water, alpha-epichlorohidrin, dichlorohydrin, trichloropropane)

<Table 3> and <Table 4> represent distillation data in the conventional distillation system and the distillation system according to the present disclosure, respectively.

**[Table 3]**

| | 1 | 2 | 4 | 5 |
|---|---|---|---|---|
| Mass flow rate (kg/h) | 26,137 | | **10,000** | **11,000** |
| **-Water (kg/h)** | **16,874** | | **10,000** | **11,000** |
| **-Alpha-epichlorohidrin (kg/h)** | **8,253** | | - | - |
| **-Dichlorohydrin (kg/h)** | **157** | | - | - |
| **-Trichloropropane (kg/h)** | **853** | | - | - |
| **Pressure (barA)** | **0.406** | | **0.200** | **1.080** |
| **Temperature (°C)** | **74.0** | | **60.0** | **104.0** |
| **MVR power** | | | **854.5** | |
| **(KW)** | | | | |

### <Table 3: Conventional Technology>

**[Table 4]**

| | 1 | 2 | 4 | 5 |
|---|---|---|---|---|
| Mass flow rate (kg/h) | 26,137 | 26,137 | **16,250** | **18,000** |
| **-Water (kg/h)** | **16,874** | **16,874** | **16,250** | **18,000** |
| **-Alpha-epichlorohidrin (kg/h)** | **8,253** | **8,253** | - | - |
| **-Dichlorohydrin (kg/h)** | **157** | **157** | **-** | - |
| **-Trichloropropane (kg/h)** | **853** | **853** | **-** | - |
| **Pressure (barA)** | **0.406** | **0.50** | **0.262** | **1.080** |
| **Temperature (°C)** | **74.0** | **94.6** | **66.0** | **104.0** |
| **MVR power (KW)** | **233** | | **1,483** | |

### <Table 4 : Present Invention>

In <Table 3> and <Table 4>, No. 1 data is data of the overhead vapor discharged from the evaporation-separator 110, the overhead vapor being composed of water and alpha-epichlorohidrin, dichlorohydrin and trichloropropane, and all the value including the conditions of pressure and temperature being the same. In <Table 4>, No. 2 data is data of the overhead vapor that passed through the first compressor 120 of the present disclosure, and it can be seen that the pressure by compression of the first compressor 120 rose from 0.406 barA to 0.50 barA, and that the temperature rose from 74.0 °C to 94.6 °C.

In <Table 3> and <Table 4>, No. 4 data represents data of the saturated water vapor evaporated at the evaporator 130, and it can be seen that in the conventional distillation system, 10,000 (kg/h) of saturated water vapor was generated, but in the distillation system according to the present disclosure, a much more amount of 16,250 (kg/h) of saturated water vapor was generated. It can be seen that the amount of saturated water vapor after a final compression by the second compressor are 11,000 (kg/h) and 18,000 (kg/h), respectively.

As aforementioned with reference to <Table 1> to <Table 4>, it can be seen that, in the present disclosure, the overhead vapor is adiabatically compressed before being introduced into the evaporator, thereby the amount of saturated water vapor generated is increased significantly compared to the conventional technology.

Next, a distillation method of the distillation system according to an embodiment of the present disclosure will be explained.

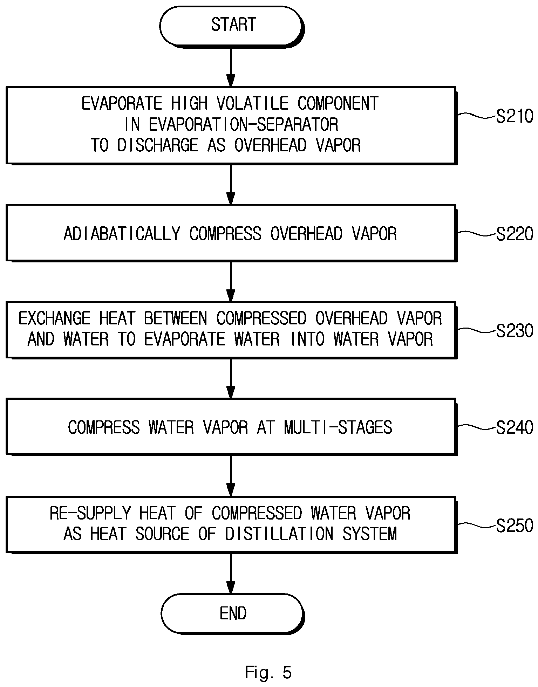

FIG. 5 is a flowchart of the distillation method according to an embodiment of the present disclosure.

First of all, in the evaporation-separator 110, feedstock is heated using heat energy applied from a separate steam supply unit, so that a high volatile component is evaporated and discharged as overhead vapor (S210). Next, the first compressor 120 adiabatically compresses the overhead vapor discharged from the evaporation-separator 110 before the overhead vapor is introduced into the evaporator 130 (S220). Further, the overhead vapor adiabatically compressed by the first compressor 120 is introduced into the evaporator 130, and water supplied from a separate water supply source (not illustrated) is evaporated into water vapor by the heat exchange using condensation latent heat of the overhead vapor (S230). The saturated water vapor evaporated at the evaporator 130 is compressed at the second compressor 140 (S240), preferably being compressed at multi-stages by the compressor 140 using Mechanical Vapor Recompression (MVR) method. The water vapor compressed through the second compressor 140 may be supplied as a heat source for separating the mixed material in the distillation system (S250). For example, the compressed water vapor may be used as a heat source for heating the evaporation-separator 110 by means of the reboiler 150, or used in other processes that need compressed steam.

In the drawings and specification, there have been disclosed typical embodiments of the invention, and although specific terms are employed, they are used in a generic and descriptive sense only and not for purposes of limitation. It will be understood by those of ordinary skill in the art that various changes in form and details may be made therein without departing from the spirit and scope of the present invention as defined by the following claims.

## Claims

1. A distillation system for separating a mixed material existing in feedstock into a high volatile component and a low volatile component using difference of boiling point, wherein the distillation system comprises:
an evaporation-separator which evaporates the high volatile component to discharge the high volatile component as an overhead vapor;
a first compressor which receives the discharged overhead vapor and adiabatically compresses the received discharged overhead vapor;
an evaporator which receives the adiabatically compressed overhead vapor, exchanges heat between water supplied from a water supply source and the compressed overhead vapor, and evaporates the water into water vapor; and
a second compressor which receives the evaporated water vapor and compresses the received evaporated water vapor.

2. The system according to claim 1,
wherein heat of the water vapor compressed at the second compressor is supplied as a heat source for separating the mixed material in the distillation system.

3. The system according to claim 1,
wherein the first compressor adiabatically compresses the overhead vapor using Mechanical Vapor Recompression (MVR) method.

4. A distillation method at a distillation system for separating a mixed material existing in feedstock into a high volatile component and a low volatile component using difference of boiling point, **characterized in that** the distillation method comprises following steps:
(a) applying heat to an evaporation-separator containing the mixed material and evaporating the high volatile component to discharge the high volatile component as an overhead vapor;
(b) adiabatically compressing the discharged overhead vapor by means of a first compressor which receives the discharged overhead vapor;
(c) evaporating the water into water vapor by exchanging heat between water and the adiabatically compressed overhead vapor by means of an evaporator which receives the adiabatically compressed overhead vapor; and
(d) compressing the water vapor by means of a second compressor which receives the evaporated water vapor.

5. The method according to claim 4,
further comprising, after the step (d),
(e) supplying heat of the compressed water vapor as a heat source for separating the mixed material in the distillation system.
